# FASCICULE DE BREVET EUROPEEN

(11) **EP 3 360 080 B1**
(45) Date de publication et mention de la délivrance du brevet: **22.09.2021**
(21) Numéro de dépôt: 16794686.2
(22) Date de dépôt: 07.10.2016
(51) Int. Cl.: G06K 19/077

(54) **PRODUIT ET PROCEDE PERMETTANT LA FABRICATION DE TAGS RFID DANS LE DOMAINE DE LA TRACABILITE DE PRODUITS TEXTILES COMME PAR EXEMPLE DANS LES BLANCHISSERIES INDUSTRIELLES**
PRODUKT UND PROZESS ZUR HERSTELLUNG RFID TAGS IM BEREICH DER TEXTILPRODUKTEN WIE RÜCKVERFOLGBARKEIT ZUM BEISPIEL IN INDUSTRIAL WÄSCHEREIEN
PRODUCT AND METHOD FOR MANUFACTURING RFID TAGS IN THE FIELD OF THE TRACEABILITY OF TEXTILE PRODUCTS AS FOR EXAMPLE IN INDUSTRIAL LAUNDRIES

(30) Priorité: 09.10.2015 FR 1559653
(43) Date de publication de la demande: 15.08.2018
(73) Titulaire: Fenotag, 13010 Marseille (FR)
(72) Inventeur: ELBAZ, Didier, 13010 Marseille (FR)
(74) Mandataire: Brun, Philippe Alexandre Georges
(86) Numéro de dépôt international: PCT/FR2016/052601
(87) Numéro de publication internationale: WO 2017/060652

(56) Documents cités:
- EP-A1- 1 914 671
- EP-A1- 2 019 425
- WO-A1-2004/084130

## Description

L'invention concerne un procédé d'assemblage d'une étiquette électronique de radio-identification. Elle concerne également une étiquette électronique de radio-identification.

Les étiquettes électroniques de radio-identification, souvent désignées par le terme anglo-saxon « RFID tags », RFID étant l'acronyme de la dénomination Radio Frequency IDdentification, sont des objets de petites tailles utilisés pour mémoriser et restituer des données, à travers une communication par radiofréquences, généralement en lien avec un objet hôte. Une étiquette électronique de radio-identification est donc généralement apposée, c'est-à-dire collée ou cousue par exemple, voire même incorporée, sur ou dans un objet. Une étiquette électronique de radio-identification consiste généralement en un support ou substrat sur lequel est déposée une antenne conductrice associée, c'est-à-dire connectée ou couplée de manière électromagnétique, à un composant électronique. L'antenne confère au composant électronique une interface de communication sans contact ou sans fil pour lui permettre de recevoir des requêtes émises depuis un émetteur ou lecteur par voie radio. En retour, le composant électronique élabore une réponse également transmise via ladite antenne par voie radio. Ces communications sont généralement opérées sur une bande de fréquences de 900 mégahertz environ (ou UHF, acronyme de Ultra Hautes Fréquences) ou 13,56 mégahertz (ou HF, acronyme de Hautes Fréquences) dans le cadre de communication à courtes distances.

La majorité des étiquettes électroniques est dite passive. En effet, l'énergie électrique, nécessaire au fonctionnement du composant électronique d'une telle étiquette, est tirée du champ électromagnétique généré par l'émetteur d'une requête, lorsque celui-ci se trouve à portée de communication de l'étiquette, c'est-à-dire à quelques dizaines de centimètres, voire pour les plus performantes à quelques mètres. D'autres étiquettes électroniques sont dites actives car elles intègrent une source énergétique apte à décupler la puissance et donc la portée d'émission de l'étiquette.

Les étiquettes électroniques fournissent notamment une alternative aux balises ou tags graphiques, tels que les code-barres par exemple, car elles ne nécessitent pas une lecture directe.

Le support constituant la plus grande partie du corps d'une étiquette électronique est composé généralement d'un ou plusieurs matériaux adaptés aux conditions d'utilisation ou d'exploitation de l'étiquette ou de l'objet sur lequel ladite étiquette est apposée ou intégrée. Un tel support peut être rigide ou souple. A titre d'exemples non limitatifs, un tel support peut comporter des matériaux plastiques, cellulosiques ou textiles.

Le choix des matériaux, des constituants utilisés pour confectionner une étiquette électronique de radio-identification, ainsi que le procédé d'assemblage de ladite étiquette influent grandement sur le coût de celle-ci, la pertinence au regard d'une application visée, la robustesse et la pérennité d'une telle étiquette électronique.

Dans la suite du document, nous allons décrire un exemple de réalisation ou d'assemblage d'une étiquette électronique de radio-identification au travers d'un exemple préféré et non limitatif d'application, en lien avec le suivi d'un flux de production d'une blanchisserie ou laverie industrielle. Selon cette application, une étiquette électronique est apposée, généralement cousue, sur un linge, par exemple un drap, pour tracer le flux et la périodicité de lavage dudit linge, en milieu hospitalier ou en hôtellerie. Une telle étiquette électronique doit nécessairement être confectionnée pour être apposée facilement sur ledit linge et résister, c'est-à-dire demeurer opérationnelle, aux environnements et/ou conditions particulièrement sévères rencontrés dans le nettoyage de textiles. Ainsi, l'étiquette doit être peu encombrante et ne pas se détacher ou se déliter au gré du nettoyage ou du repassage du linge. Elle doit notamment résister aux attaques de différents produits chimiques présents dans les produits de nettoyage, tels que des acides, bases ou encore détergents, et aux contraintes thermiques de séchage et mécaniques de pressage et/ou d'essorage.

De nombreuses étiquettes électroniques, telles que celles décrites dans le document WO2012/1206063, comporte un support ou corps principal comportant un matériau textile sélectionné pour être soudé par ultrasons, afin d'enceindre une antenne conductrice ou conductrice couplée à un module de radio-identification de type RFID. Ledit module comporte un composant électronique connecté à une deuxième antenne conductrice agencée pour être couplée à ladite première antenne et ainsi améliorer la portée de communication. Cette dernière se charge de la réception et de l'émission de messages à une portée plus grande. Une telle étiquette résulte d'un procédé d'assemblage nécessitant une quantité importante de textile ou de tissu onéreux car un tel textile ou tissu doit fondre sous l'effet d'ultrasons. Le support textile consiste en une bande pliée en deux dans le sens de la longueur pour enceindre la première antenne, ladite première antenne étant préalablement tissée sur ledit support textile, voire déposée, à l'instar du module de radio-identification, sur une couche d'un matériau adhésif assurant le collage à température ambiante des éléments sur le support. Les deux demi-bandes de tissus sont soudées entre elles par un procédé de soudure par ultrasons, particulièrement complexe à industrialiser et donc coûteux in fine. Pour appliquer une telle étiquette sur un objet hôte, tel que par exemple un linge, dont on souhaite tracer le parcours durant un processus de blanchisserie, ladite étiquette est généralement cousue sur ledit objet au risque d'endommager l'antenne et/ou le module durant la couture de l'étiquette.

Le document EP 1 914 671 divulgue un module flexible pour réaliser de la communication en champ proche. Un tel module est particulièrement adapté pour des cartes à puce sans contact ou à double interface avec et sans contact.

Le document EP 2 019 425 divulgue une étiquette électronique comprenant une antenne sur un substrat qui reçoit un module de communication en champ proche. Le module de communication est encapsulé entre deux films antistatiques afin d'éviter des décharges électrostatiques lors de l'assemblage du module sur le substrat.

Pour réduire notamment le volume de tissus requis pour constituer le support d'une étiquette telle que décrite précédemment, un procédé, tel que celui décrit dans le document EP2405054, consiste à utiliser un support textile comprenant une poche dans laquelle est inséré le module de radio-identification de la future étiquette. Une antenne conductrice, agencée pour assurer une communication à champ lointain, est fixée sur le support textile par couture, impression laser, ou encore via une colle appliquée sur ladite poche. Un tel procédé réduit la quantité de tissus nécessaire pour constituer le support de l'étiquette et évite de requérir à l'utilisation de la soudure par ultrasons. Toutefois, l'obturation de la poche est complexe pour que ladite poche enceigne le module de radio-identification après insertion de celui-ci. Le gain économique découlant d'une diminution de la quantité de tissus pour constituer le corps de l'étiquette ou encore, de la sélection des matériaux pour agencer le corps de l'étiquette, est compensé ou annulé par la mise en œuvre d'un processus délicat de couture pour réaliser la poche hébergeant le module puis pour clôturer ladite poche.

Une autre technique divulguée par le document FR3012682 consiste, pour réaliser le corps de l'étiquette, à utiliser un matériau textile sous la forme d'une bande comportant une antenne conductrice, préalablement brodée sur ledit textile ou imprimée sur celui-ci. Selon cet enseignement, un adhésif thermodurcissable est déposé sur ledit support, du moins sur une zone recouvrant en partie l'antenne pour assurer une future communication par couplage, ladite zone étant prévue pour accueillir un module de radio-identification. Un tel procédé consiste à recouvrir le module d'une bande de textile, par pliage de la bande initiale ou par dépôt d'une deuxième bande. Le support textile est ainsi « rabattu » sur le module et l'antenne. Pour enceindre les éléments, les deux bandes textiles sont collées l'une contre l'autre par pression à chaud, entraînant irréversiblement la polymérisation de l'adhésif thermodurcissable disposé au cœur dudit support. Un tel procédé permet de prévenir l'utilisation de la soudure à ultrasons précédemment évoquée et s'affranchit d'une confection d'une poche à obturer par couture. Un tel procédé reproduit cependant certains inconvénients d'ores et déjà évoqués et inhérents, notamment à l'emploi d'une grande quantité de matériaux textiles pour constituer une enveloppe support afin d'enceindre antenne et module de radio-identification. Un tel procédé sous-entend également l'emploi d'un élément raidisseur en matériau souple et résilient, pour donner une certaine tenue à l'étiquette électronique de sorte que celle-ci recouvre naturellement sa forme initiale, c'est-à-dire sensiblement plane, après pliage de l'étiquette. En effet, une étiquette confectionnée selon l'enseignement tiré du document FR3012682, ne comportant pas d'élément raidisseur, demeurerait repliée sur elle-même sous l'action d'une opération de repassage ou d'essorage d'un textile sur lequel l'étiquette serait appliquée. La communication sans fil conférée par l'antenne d'une étiquette repliée sur elle-même en serait clairement altérée, du moins pénalisée. Un tel élément raidisseur, sous la forme d'un élément tubulaire ou d'un plan en silicone par exemple, intégré au sein de l'étiquette avant l'opération de pressage à chaud pour clore l'enveloppe de celle-ci, procure une force élastique suffisante pour que l'étiquette recouvre sa configuration de repos. L'assemblage d'une telle étiquette se révèle finalement toujours peu satisfaisant et efficace. De plus, pour rendre « thermopatchable » ou positionnable à chaud une telle étiquette électronique sur un objet hôte, afin notamment de ne pas altérer l'intégrité de celui-ci, il est nécessaire d'adjoindre à ladite étiquette un adhésif supplémentaire, ce qui augmente le coût de fabrication de celle-ci.

L'invention permet de répondre aux inconvénients soulevés par les solutions connues en proposant un procédé innovant d'assemblage d'une étiquette électronique de radio-identification.

De conception modulaire et particulièrement innovante, un tel procédé procure de nombreux avantages parmi lesquels nous pouvons mentionner :
- la fabrication d'une étiquette électronique de radio-identification robuste et exploitable dans le cadre d'une grande diversité d'applications ;
- l'assemblage d'une étiquette électronique résiliente offrant, de par sa conception, une excellente protection du module de radio-identification et de l'antenne ;
- l'obtention d'une étiquette électronique comportant des éléments de sécurité attestant toute tentative malveillante de désassemblage de ladite étiquette ;
- l'élaboration d'une étiquette électronique naturellement dotée d'une mémoire de forme, pour préserver sa capacité de communication sans requérir à des éléments raidisseurs ;
- l'agencement d'une étiquette facilitant la fixation de celle-ci sur tout support prévenant tout risque d'altération de l'intégrité du module de radio-identification et/ou de l'antenne de ladite étiquette électronique.

A cette fin, l'invention concerne un procédé d'assemblage d'une étiquette électronique de radio-identification comprenant un module de radio-identification, une première antenne conductrice, un premier support diélectrique agencé pour accueillir ledit module radio-identification et ladite première antenne conductrice, ledit module de radio-identification comprenant un composant électronique connecté électriquement à une deuxième antenne, la deuxième antenne étant couplé à la première antenne, ledit procédé comportant :
- une étape préalable pour déposer sur les faces supérieure et inférieure d'une bande de modules de radio-identification une couche d'un premier matériau thermoplastique ayant des fonctions d'adhésion ;
- une étape pour presser l'ensemble à une température suffisante pour activer le premier matériau thermoplastique pour assurer une coopération pérenne des couches du premier matériau sur les faces supérieure et inferieure de la bande de modules de radio-identification ;
- une étape de découpe des modules recouverts du premier matériau sur les faces supérieure et inferieure (10d) ;
- une étape pour déposer un des modules découpés de radio-identification sur la face supérieure du premier support, ce dernier comportant la première antenne conductrice, ledit module découpé de radio-identification étant positionné à proximité immédiate de la première antenne conductrice ;
- une étape pour déposer sur la face supérieure du premier support une couche d'un deuxième matériau thermoplastique et pour presser l'ensemble à une température suffisante pour activer le deuxième matériau thermoplastique, ladite couche de deuxième matériau thermoplastique recouvrant au moins partiellement la première antenne conductrice et ledit module découpé de radio-identification.

Pour assurer un positionnement correct du module de radio-identification avant la mise en œuvre de l'étape pour déposer, sur la face supérieure du premier support, une couche d'un deuxième matériau thermoplastique, un procédé selon l'invention peut comporter avantageusement, préalablement à l'étape pour déposer ledit module découpé de radio-identification sur la face supérieure du premier support, une étape pour déposer au moins sur une zone de la face supérieure du premier support, une couche d'un matériau adhésif dont la pégosité à température ambiante est suffisante pour maintenir la position dudit module découpé de radio-identification sur le premier support, ladite zone de la face supérieure du premier support étant destinée à accueillir ledit module découpé de radio-identification.

En variante ou en complément, un tel procédé peut, préalablement à l'étape pour déposer ledit module découpé de radio-identification sur la face supérieure du premier support, une étape pour déposer sur la face du module de radio-identification destinée à coopérer avec la face supérieure du premier support, une couche d'un matériau adhésif dont la pégosité à température ambiante est suffisante pour maintenir la position dudit module découpé de radio-identification sur le premier support.

En variante encore, un procédé conforme à l'invention peut comporter, préalablement à l'étape pour déposer ledit module découpé de radio-identification sur la face supérieure du premier support, une étape pour chauffer le premier matériau déposé sur la face dudit module découpé de radio-identification destinée à coopérer avec la face supérieure du premier support, au-delà de la température de fusion dudit premier matériau.

Préalablement à l'assemblage d'une étiquette électronique en tant que telle, un procédé conforme à l'invention peut comporter une étape pour assembler le module de radio-identification. Une telle étape préalable peut consister à :
- déposer ou graver sur un deuxième support diélectrique la deuxième antenne conductrice agencée pour assurer une communication électromagnétique à champ proche et un composant électronique ;
- assurer une coopération électrique entre ladite deuxième antenne conductrice et ledit composant électronique et,
- déposer une couche d'une résine de protection sur les faces demeurant exposées dudit composant électronique et ladite deuxième antenne conductrice.

Pour protéger le module de radio-identification d'éventuels chocs ou contraintes mécaniques et par ailleurs offrir une fonction de sécurité attestant toute tentative de désassemblage frauduleux d'une étiquette électronique assemblée selon un procédé conforme à l'invention, ce dernier peut comporter une étape pour déposer, au moins sur la face demeurant exposée dudit module découpé de radio-identification, un treillis fibreux agencé pour être irrémédiablement déstructuré lors d'une tentative de désassemblage de l'étiquette électronique visant à arracher ledit module découpé de radio-identification du premier support, ladite étape étant mise en œuvre préalablement à l'étape pour déposer sur la face supérieure du premier support une couche d'un deuxième matériau thermoplastique.

En variante ou en complément, un tel procédé peut comporter une étape pour inscrire, au moins sur la face exposée dudit module découpé de radio-identification et sur une partie de la face supérieure du premier support demeurant exposée, un message dont la teneur est irrémédiablement altérée lors d'une tentative de désassemblage de l'étiquette électronique visant à arracher ledit module découpé de radio-identification du premier support, ladite étape étant mise en œuvre préalablement à l'étape pour déposer sur la face supérieure du premier support une couche d'un deuxième matériau thermoplastique.

Pour diminuer le nombre de rebuts en fin de processus d'assemblage, un procédé selon l'invention peut comporter une étape pour tester électriquement les modules de radio-identification et pour lequel l'étape pour déposer ledit module découpé de radio-identification sur la face supérieure du premier support n'est effectuée que si ledit module découpé de radio-identification est opérationnel.

Le premier support constituant le corps principal d'une étiquette électronique selon l'invention peut comporter initialement la première antenne conductrice. En variante, ledit premier support peut en être dénué. Dans ce cas, l'invention prévoit qu'un procédé d'assemblage puisse comporter une étape préalable pour déposer la première antenne conductrice sur le premier support ou pour broder, imprimer, laminer ou tisser ladite première antenne sur ledit premier support.

Selon la portée de communication désirée, afin de diminuer l'encombrement de l'étiquette, l'invention prévoit que la première antenne conductrice portée par le premier support puisse comporter avantageusement une ou plusieurs boucles d'une piste et/ou d'un fil conducteurs.

Pour permettre de déposer un module de radio-identification sur la face supérieure du premier support, ledit module découpé de radio-identification comportant une antenne conductrice interne, sans que ladite antenne conductrice interne audit module ne recouvre avantageusement, ne serait-ce que partiellement, la première antenne, cette dernière peut être agencée pour former une ou plusieurs boucles d'un diamètre supérieur aux dimensions de l'antenne conductrice interne audit module découpé de radio-identification.

Selon un mode de réalisation préféré, les premier et deuxième matériaux thermoplastiques peuvent être sélectionnés parmi des polyuréthanes thermoplastiques, des polyphénylènes oxydes, des polyamides, des polyacétates, des polyethylènes, des polypropylènes, des polyoléfines ou des Ethylènes-Acétates de Vinyles.

Selon le domaine d'application dans lequel l'étiquette électronique doit être exploité, les premier et deuxième matériaux thermoplastiques peuvent être sélectionnés pour présenter des températures de fusion respectives supérieures à un seuil de température déterminé. Un tel seuil devrait être supérieur aux températures auxquelles sera exposée ladite étiquette. Il peut en être de même pour le choix du ou des matériaux constituant le premier support. Ce dernier pourra comporter un matériau sélectionné parmi le coton, le nylon, la viscose, un polyester, ou une matière synthétique.

Pour exploiter un conditionnement sous la forme d'une bande comportant une pluralité d'étiquettes électroniques et en faciliter la dissociation, un procédé d'assemblage selon l'invention peut comporter une étape pour prédécouper transversalement le premier support lorsque que celui-ci se présente sous la forme d'une bande, chaque section ainsi matérialisée entre deux prédécoupes étant agencée pour comporter la première antenne conductrice et accueillir ledit module découpé de radio-identification.

Pour accroître la protection des éléments internes d'une étiquette électronique assemblée selon l'invention, voire pour faciliter la fixation de ladite étiquette sur un objet hôte, un procédé d'assemblage peut comporter une étape pour déposer sur la face du premier support opposée à celle destinée à accueillir ledit module découpé de radio-identification, une couche d'un troisième matériau thermoplastique.

L'invention prévoit avantageusement que les premier et deuxième, voire troisième, matériaux thermoplastiques puissent être sensiblement identiques.

L'invention concerne également une étiquette électronique de radio-identification comportant un support, une première antenne conductrice d'étiquette, un module de radio-identification comprenant un support diélectrique, une deuxième antenne conductrice agencée pour assurer une communication électromagnétique en champ proche et un composant électronique, ledit composant électronique étant connecté électriquement à ladite deuxième antenne conductrice, toute face exposée dudit composant électronique et de la deuxième antenne conductrice étant recouverte par une résine de protection, ledit module de radio-identification comportant une couche d'un premier matériau thermoplastique réactivable à chaud sur une face supérieure et sur une face inférieure, ledit module de radio-identification étant positionné sur une face dite supérieure dudit support de sorte que la deuxième antenne interne audit module de radio-identification ne recouvre pas ladite première antenne conductrice d'étiquette. Ladite face supérieure du support, c'est-à-dire celle sur laquelle le module est posé, comporte une couche d'un deuxième matériau thermoplastique, ladite couche de deuxième matériau thermoplastique recouvrant au moins partiellement la première antenne conductrice et ledit module de radio-identification, ladite couche de deuxième matériau thermoplastique ayant été laminée à chaud de sorte à assurer une bonne adhésion avec la couche de premier matériau thermoplastique dudit module.

Pour préserver le module de radio-identification d'une telle étiquette lors de sa fixation par exemple par couture sur un objet hôte, ladite première antenne conductrice d'étiquette et ledit module de radio-identification peuvent être mutuellement agencés sur le support pour que ledit module occupe une position excentrée sur ledit support, ce dernier comportant une plage d'une hauteur minimale déterminée, ladite plage englobant partiellement ladite première antenne d'étiquette mais non ledit module de radio-identification.

D'autres caractéristiques et avantages apparaîtront plus clairement à la lecture de la description qui suit et à l'examen des figures qui l'accompagnent parmi lesquelles :
- la figure 1 présente les principales étapes d'un procédé pour fabriquer et/ou adapter un module de radio-identification sur une ligne de production et/ou sur une machine d'assemblage conforme à l'invention ;
- la figure 1A illustre un mode de réalisation préféré pour adapter ou produire des modules de radio-identification disposés en colonnes transversales sur un support diélectrique sous la forme d'une bande ;
- la figure 1B décrit les configurations respectives d'un module de radio-identification, avant et après adaptation dudit module ;
- la figure 2 présente schématiquement une ligne de production pour fabriquer et/ou assembler une étiquette électronique de radio-identification comportant une antenne de communication à champ lointain ;
- les figures 2A, 2B et 2C illustrent respectivement trois situations successives durant un assemblage d'une étiquette électronique de radio-identification conforme à l'invention ;
- la figure 3 présente schématiquement une ligne de production pour fabriquer et/ou assembler une étiquette électronique de radio-identification comportant une antenne de communication à champ proche sur une ligne de production conforme à l'invention, ladite étiquette électronique étant adaptée pour coopérer avec une deuxième antenne de communication à champ lointain agencée sur l'objet hôte de l'étiquette électronique ;
- les figures 3A et 3B illustrent respectivement deux situations successives durant un assemblage d'une étiquette électronique de radio-identification conforme à l'invention ;
- la figure 3C décrit une étiquette électronique conforme à l'invention connectée et cousue sur un objet hôte ;
- la figure 3D décrit un exemple d'une étiquette assemblée selon l'invention dont l'agencement est particulièrement avantageux ;
- la figure 4 illustre l'ensemble des étapes d'un exemple préféré d'un procédé d'assemblage conforme à l'invention, lesdites étapes étant mises en œuvre par une ligne de production conforme à l'invention.

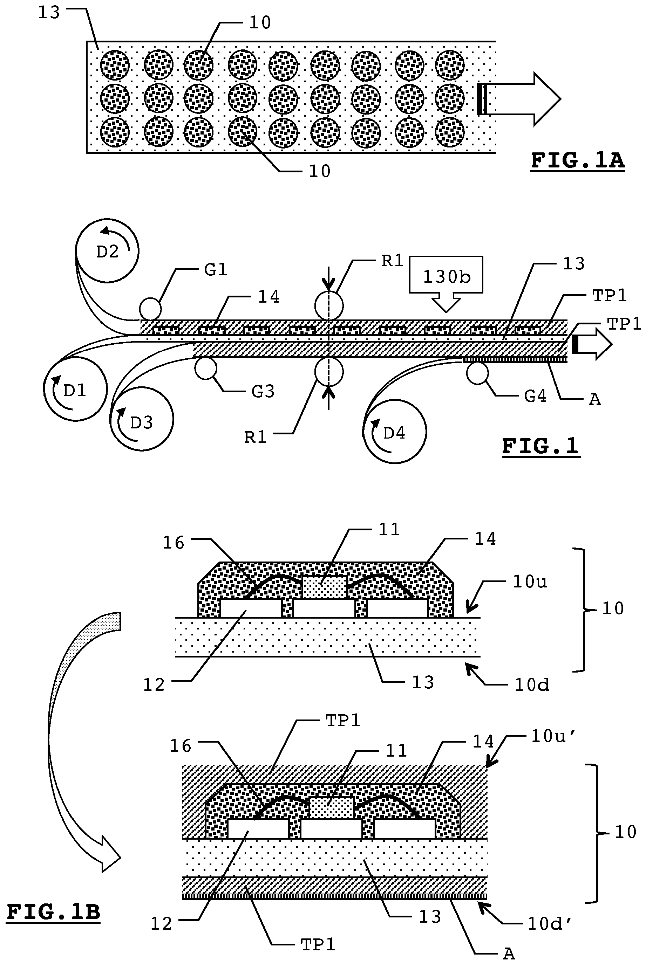

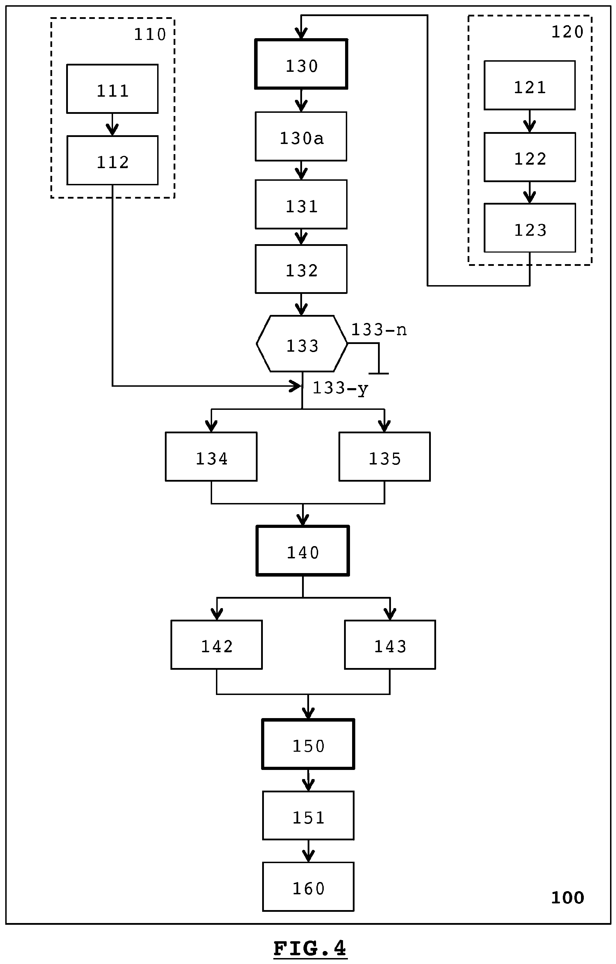

La figure 1 illustre un exemple préféré de mise en œuvre d'une ligne de production ou d'une machine pour assembler et/ou adapter un module de radio-identification 10 conforme à l'invention. Ladite figure 1 sera décrite en liaison avec la figure 4 qui illustre, quant à elle, une séquence globale d'un procédé d'assemblage 100 d'une étiquette électronique de radio-identification intégrant un tel module 10.

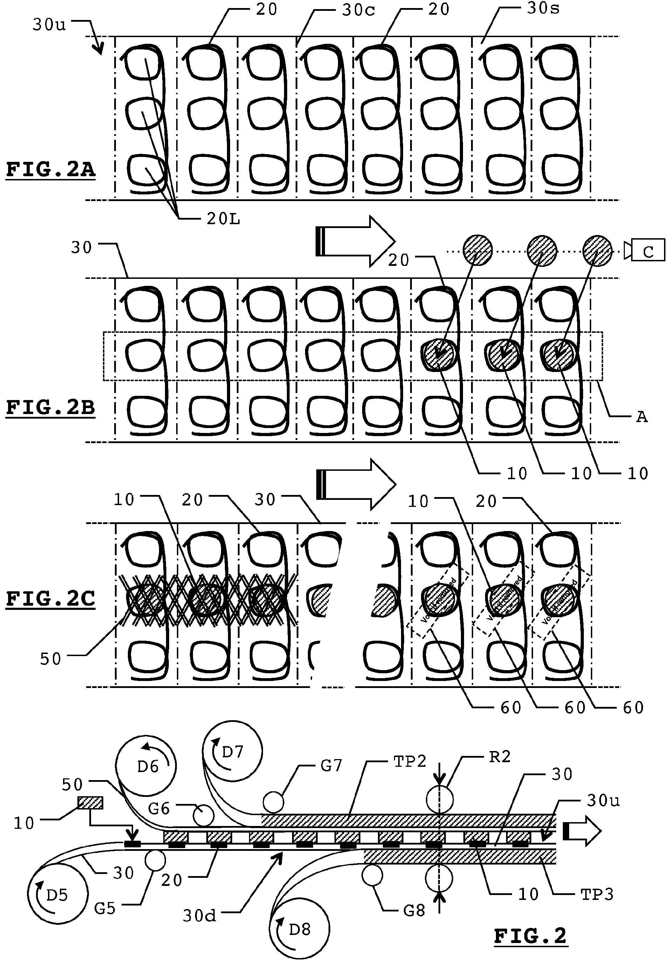

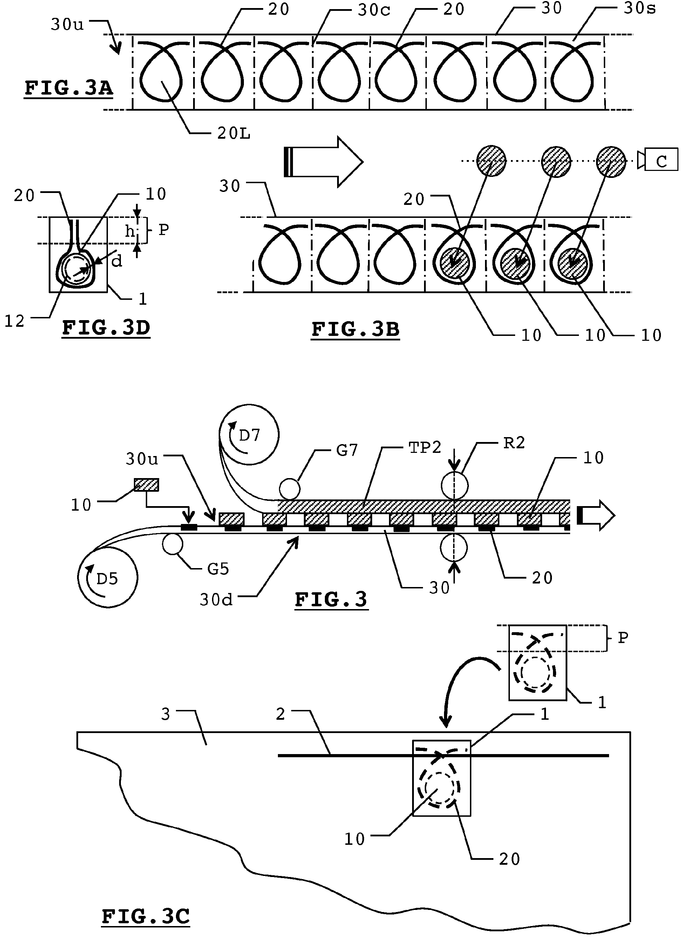

L'assemblage en tant que tel d'une étiquette électronique 1 sera décrit, quant à lui, en liaison avec les figures 2 et 3, selon la configuration de l'étiquette électronique que l'on souhaite produire.

En liaison avec les figures 1, 1A, 1B et 4, une première étape d'un procédé d'assemblage 100 conforme à l'invention consiste à assembler ou adapter un module de radio-identification 10 destiné à coopérer par couplage avec une antenne conductrice, ladite antenne étant agencée pour assurer une communication à champ lointain, c'est-à-dire à quelques mètres de distance.

Comme mentionné précédemment, un tel module 10 comporte principalement un support 13 diélectrique, tel qu'un époxy, un polyimide ou encore un polytéréphtalate d'éthylène, communément connu sous l'abréviation anglo-saxonne « PET » pour PolyEthylene Terephtalate. Un tel support est conditionné sous la forme d'une bande actionnée en translation au moyen d'un dérouleur D1 associé à un guide G1, tel qu'un rouleau motorisé. Un procédé d'assemblage 100 conforme à l'invention peut comporter une première étape 120 pour assembler un module de radio-identification 10. Une telle étape préalable 120 consiste avantageusement à déposer, graver ou imprimer 121 une antenne conductrice 12 sur une face 13u, dite face supérieure, du support 13. Ladite étape 120 consiste en outre à déposer un composant électronique ou microcontrôleur 11 sur ladite face supérieure 13u du support 13. Pour que ledit composant électronique 11 puisse communiquer par couplage avec un dipôle tiers, ledit composant 11 est connecté électriquement 122 à l'antenne 12. Une telle opération 122 peut résulter d'une connexion de plages de contacts du composant 11 sur une ou plusieurs pistes ou spires de l'antenne 12 au moyen d'un ou plusieurs fils conducteurs 16, comme l'indique la figure 1. En variante, certains composants électroniques 11 comportent une face active. Ledit composant est déposé, face active contre l'antenne 12, cette opération assurant ainsi directement une connexion électrique. On parle alors d'un procédé dit « flip chip » selon une terminologie anglo-saxonne. Pour protéger le composant 11, les fils éventuels 16 et l'antenne 12, l'étape 120 peut consister à recouvrir lesdits éléments exposés 11, 12, 16 par une résine de protection non conductrice 14. On entend par « élément exposé » ou « face exposée d'un élément », tout élément ou partie de celui-ci qui n'est pas en contact direct avec un élément tiers.

Le composant 11, l'antenne 12 et éventuellement les fils 16 sont ainsi recouverts par ladite résine de protection. Celle-ci est durcie par exemple par polymérisation aux ultraviolets, par réticulation thermique ou par toute autre technique. L'étape 120, telle que décrite en liaison avec la figure 4, correspond à un procédé d'assemblage d'un module de radio-identification classique et connu. En revanche, l'invention prévoit une étape supplémentaire 130 pour déposer sur les faces supérieure 10u et inférieure 10d du module de radio-identification 10, une couche d'un premier matériau thermoplastique TP1.

Ainsi, à l'issue de cette étape 130, un module de radio-identification 10 conforme à l'invention présente une face supérieure 10u' et une face inférieure 10d' comportant une telle couche du premier matériau thermoplastique TP1.

A titre d'exemple non limitatif, le matériau TP1 peut consister en un polyuréthane thermoplastique, connu également sous l'acronyme TPU. En variante, un tel matériau thermoplastique TP1 peut être sélectionné parmi des polyuréthanes thermoplastiques, des polyphénylènes oxydes, des polyamides, des polyacétates, des polyethylènes, des polypropylènes, des polyoléfines ou des Ethylènes-Acétates de Vinyles, avantageusement conditionnés sous forme de films.

Plus généralement, on entendra, au sens de l'invention, par « matériau thermoplastique », tout matériau ou polymère susceptible d'être activé de manière répétée sous l'effet d'une augmentation de température, ladite température dépassant une température de fusion déterminée. L'activation d'un tel matériau traduit un changement d'état de l'état solide (à température ambiante) à un état liquide visqueux. Ainsi, lorsque l'on atteint ou dépasse une température de fusion du matériau, ce dernier se ramollit et peut être aisément mis en forme. Il durcit par refroidissement. Ainsi, au sens de l'invention et dans tout le document, ledit matériau thermoplastique est avantageusement réactivable à chaud. Un tel matériau se distingue d'un matériau thermodurcissable qui ne peut être mis en œuvre qu'une seule fois par polymérisation. En outre, un tel matériau thermoplastique comporte des fonctions d'adhésion, qui, lorsque celui-ci est réactivé, c'est-à-dire chauffé au-delà de la température de fusion dudit matériau, permet de repositionner le module de radio-identification ou plus généralement l'étiquette électronique de radio-identification sur un support ou tout objet hôte.

L'invention prévoit en outre que l'épaisseur de la couche de premier matériau thermoplastique TP1 déposée sur les faces 10u et 10d soit de cinquante à cinq cents micromètres, typiquement deux cents micromètres. En effet, une telle épaisseur permet de disposer d'un module de radio-identification présentant des propriétés intéressantes de résilience, tout en gardant une éventuelle souplesse. Les éléments actifs, c'est-à-dire le composant 11 et l'antenne 12, sont ainsi protégés contre l'occurrence de chocs, ces derniers étant absorbés par le matériau thermoplastique TP1 ou les attaques physicochimiques de l'environnement de l'étiquette. Pour réaliser un tel module 10, la figure 1 décrit un exemple de réalisation d'une ligne de production ou d'une machine selon lequel, un deuxième dérouleur D2, associé au moyen guide G1, entraîne en translation une bobine du premier matériau thermoplastique TP1 pour déposer une couche de celui-ci sur la face supérieure 10u du module de radio-identification 10. De même, un troisième dérouleur D3, associé à un guide G3, peut être exploité pour entraîner en translation une bobine de premier matériau thermoplastique TP1 pour en déposer en couche sur la face inférieure 10d dudit module de radio-identification 10. Une étape 130a de laminage ou de pressage à chaud, c'est-à-dire à une température supérieure à la température de fusion du premier matériau thermoplastique TP1 assure une coopération pérenne des couches supérieure et inférieure de premier matériau TP1 sur les faces supérieure 10u et inférieure 10d du module. Une telle opération 130a de pressage peut être réalisée au moyen d'une paire R1 de rouleaux, en miroir l'un de l'autre, assurant une fonction de pressage de l'assemblage lorsque ce dernier est tracté entre lesdits rouleaux, pour que l'adhésion des deux couches du matériau TP1 soit durable. En variante, des presseurs parallèles, dont la température, le temps de pressage et la pression peuvent être ajustés au besoin, peuvent être utilisés en lieu et place desdits rouleaux R1.

La figure 1 décrit également un exemple de réalisation du dépôt d'une couche de matériau thermoplastique TP1 sur les faces supérieures et inférieures respectives de plusieurs modules simultanément. Comme l'indique la figure 1A, des modules de radio-identification 10 peuvent avantageusement être positionnés sur un support sous la forme d'une bande de trente-cinq millimètres de largeur. Une telle configuration permet de positionner lesdits modules 10 par colonnes de trois modules transversales à l'axe longitudinal de la bande. Après une application 130 du matériau thermoplastique TP1, les modules de radio-identification sont découpés 132 et isolés les uns des autres.

Un procédé 100 conforme à l'invention prévoit, préalablement à l'assemblage d'une étiquette électronique en tant que telle, une étape 133 pour tester électriquement le bon fonctionnement des modules de radio-identification recouverts par le matériau thermoplastique TP1. Une telle opération 133 peut être mise en œuvre avant ou après la dissociation 132 desdits modules 10. Les modules défectueux sont rejetés, situation illustrée par le lien 133-n en figure 4. Dans le cas contraire, situation illustrée par le lien 133-y en figure 4, le module est opérationnel et pourra être exploité dans le cadre de l'assemblage ultérieur d'une étiquette électronique. Cette étape de test 133 peut en outre permettre d'initialiser ou mettre à jour le contenu de certaines mémoires du composant électronique inclus dans un module de radio-identification jugé opérationnel.

En outre, un procédé 100 d'assemblage conforme à l'invention peut comporter, après le dépôt 130 de la couche de matériau thermoplastique TP1, une étape optionnelle 131 visant à déposer sur une face inférieure ou supérieure du module 10, c'est-à-dire une des faces du module de radio-identification 10 destinée à coopérer avec la face supérieure 30u d'un support 30 constituant une étiquette électronique (nous étudierons cette étape d'assemblage ultérieurement en liaison avec les figures 2 et 3), une couche d'un matériau adhésif A dont la pégosité à température ambiante est suffisante pour maintenir la position future du module de radio-identification 10 sur ledit support 30. Sur l'exemple décrit en liaison avec la figure 1B, un tel adhésif A est déposé sur la face inférieure 10d' du module de radio-identification 10. Ledit adhésif A pourrait tout aussi bien être déposé en variante ou en complément sur la face supérieure 10u'. Un tel matériau peut être avantageusement sélectionné parmi des adhésifs sensibles ou activables par pression (ou connus sous l'acronyme « PSA » ou la dénomination anglo-saxonne « Pressure-Sensitive Adhesive »).

A l'instar des couches de matériau thermoplastique TP1, l'adhésif A peut être déposé sur l'une des faces 10d' ou 10u' d'un module de radio-identification 10 au moyen d'un dérouleur D4, associé à un guide G4, actionnant une bande de matériau adhésif A appliqué par un rouleau presseur ou une presse R1. Préalablement à l'opération 131 pour déposer l'adhésif A, un procédé 100 conforme à l'invention peut comporter une étape 130b avantageuse pour accélérer un retour à température ambiante du module 10, ladite étape 130b n'étant pas représentée sur la figure 4.

Comme l'indique la figure 1B, à l'issue de la mise en œuvre des étapes précédemment décrites, un ou plusieurs modules de radio-identification sont produits, chacun étant adapté conformément à l'invention. Plus précisément, un tel module 10 comporte un support diélectrique 13, une antenne conductrice 12 agencée pour assurer une communication électromagnétique à champ proche et un composant électronique 11. Ledit composant électronique 11 est connecté électriquement à ladite antenne conductrice 12. Toute face exposée dudit composant électronique 11 et de l'antenne conductrice 12 est recouverte par une résine diélectrique 14. Lesdites faces supérieure 10u' et inférieure 10d' d'un tel module 10 comportent une couche d'un matériau thermoplastique TP1, voire pour au moins l'une d'entre elles, une couche externe d'un adhésif A. Nous pouvons mentionner que les étapes 121, 122 et 123 peuvent être facultatives, si des modules de radio-identification 10 sont d'ores et déjà assemblés. L'invention consiste dès lors à adapter lesdits modules 10 pour que leurs faces supérieure 10u' et inférieure 10d' comportent chacune une couche d'un matériau thermoplastique TP1, voire pour que l'une des faces inférieure 10d' ou supérieure 10u', comporte en outre une couche externe d'un adhésif A activable par pression à température ambiante.

Décrivons à présent en liaison avec les figures 2, 2A, 2B, 2C et 4, les étapes d'un premier exemple d'un procédé d'assemblage d'une étiquette électronique en tant que telle, conformément à l'invention. Selon lesdites figures 2, 2A, 2B et 2C l'étiquette électronique que l'on souhaite produire comporte une antenne à champ lointain 20 pour assurer une communication sans contact avec un dispositif tiers, distant de plusieurs dizaines de centimètres à plusieurs mètres. Pour en réduire l'encombrement, le dipôle conducteur sensiblement plan, constitué par ladite antenne, comporte avantageusement une pluralité de boucles 20L. La figure 2A décrit un exemple préféré d'un support 30 sous la forme d'une bande pour constituer le corps d'une étiquette électronique conforme à l'invention. Comme l'indique la figure 2, une telle bande 30 peut être actionnée en traction par un dérouleur D5 associé à un guide G5. Le support 30 peut comporter un matériau pouvant être sélectionné parmi le coton, le nylon, la viscose, un polyester ou une matière synthétique, telle qu'à titre d'exemple non limitatif le Tyvek (marque déposée), selon le domaine d'application visé pour exploiter la future étiquette 1. La figure 2A décrit en outre un agencement particulier d'une antenne conductrice 20. Contrairement aux techniques connues selon lesquelles une telle antenne décrit généralement un méandre ou une sinusoïde, une antenne conductrice 20, conforme au mode de réalisation décrit par la figure 2A, décrit une pluralité de boucles 20L dont le ou les diamètres respectifs sont choisis pour être supérieurs aux dimensions (largeurs, longueurs, voire diamètre) d'un module de radio-identification. Un tel diamètre de boucle 20L sera plus précisément déterminé pour être supérieur aux dimensions de l'antenne conductrice interne audit module de radio-identification, soit l'antenne 12 du module 10 décrit en liaison avec la figure 1B. Ainsi, comme nous le verrons ultérieurement, une telle configuration d'antenne 20 permet de positionner un module de radio-identification à proximité immédiate de ladite antenne, assurant ainsi un excellent couplage tout en prévenant tout recouvrement de l'antenne 20, notamment par l'antenne interne dudit module de radio-identification susceptible de provoquer une rupture partielle de l'antenne 20, voire du module 10 lors d'une étape ultérieure de pressage à chaud de l'ensemble. Toute autre configuration de l'antenne 20 dont l'agencement permettrait un tel positionnement d'un module de radio-identification 10, c'est-à-dire présentant une distance minimale d de l'ordre d'un demi millimètre entre l'antenne interne 12 audit module 10 et l'antenne 20, pourrait être utilisée, comme le décrit à titre d'exemple la figure 3D en liaison avec un second exemple d'assemblage d'une mini étiquette 1 conforme à l'invention.

Un support 30 peut d'ores et déjà comporter une ou plusieurs antennes conductrices 20. En variante, comme indiqué par la figure 4, un procédé d'assemblage 100 selon l'invention peut comporter une étape 110 pour élaborer ledit support 30. Ainsi, une première étape 111 peut consister à déposer une antenne conductrice 20 sur le support 30. Une telle antenne peut consister en un plusieurs fils conducteurs. Dans ce cas, lesdits fils peuvent être brodés ou tissés sur ledit support 30. En variante, une telle antenne 20 peut être imprimée par toute technique connue ou déposée par laminage et ainsi consister en une piste conductrice.

Comme l'indique l'exemple préféré décrit en liaison avec la figure 2A et la figure 4, un procédé 100 conforme à l'invention peut comporter une étape 112 pour prédécouper transversalement le support 30. Chaque section 30s ainsi matérialisée entre deux prédécoupes 30c est agencée pour comporter l'antenne conductrice 20 et accueillir un module de radio-identification 10. Le support 30 présente une face que nous nommerons face supérieure 30u et une face opposée à la précédente que nous nommerons face inférieure 30d.

Comme l'indique la figure 2B, un procédé d'assemblage 100 conforme à l'invention comporte une étape 140 pour déposer, sur la face supérieure 30u du support 30, un module de radio-identification 10, préalablement adapté selon la technique décrite précédemment en liaison avec les figures 1A, 1B et 1. Un tel module 10 comporte ainsi une couche d'un premier matériau thermoplastique TP1 sur ses faces inférieure 10d' et supérieure 10u'. L'invention prévoit que le positionnement dudit module de radio-identification 10 puisse être précisément déterminé, par exemple au moyen d'un système de vision, symbolisé en figure 2B par un capteur vidéo C, afin que l'antenne interne audit module de radio-identification 10 ne recouvre pas l'antenne conductrice 20, à l'instar de l'exemple de réalisation avantageux d'une étiquette 1 d'un format réduit décrit en liaison avec la figure 3D. Ledit système de vision permet ainsi de maîtriser les coordonnées du module de radio-identification 10 dans le plan du support 30. Toute autre technique, permettant de positionner correctement et précisément un module de radio-identification 10 sur le support 30, pourrait en variante être utilisée. Selon l'exemple de réalisation décrit par la figure 2B, un tel module 10 occupe, une fois déposé sur ledit support 30, une position sensiblement centrale au sein d'une section prédécoupée 30s. En variante, ledit module pourrait être positionné au sein d'une autre boucle 20L de ladite antenne 20 et occuper ainsi une position plus excentrée au sein de l'étiquette. En outre, la figure 2B décrit un exemple avantageux d'une ligne de production et/ou d'assemblage pour laquelle une pluralité de modules de radio-identification, en l'espèce, trois par trois, est positionnée simultanément et respectivement dans trois sections 30s consécutives du support 30.

Pour maintenir la position d'un module de radio-identification 10 durant le déplacement du support 30, l'invention prévoit l'exploitation avantageuse d'un adhésif A dont la pégosité à température ambiante est suffisante pour maintenir la position dudit module de radio-identification 10. Nous avons étudié précédemment un mode de réalisation d'un procédé 100 selon lequel une étape optionnelle 131 consiste à déposer sur la face 10u' ou 10d' destinée à être en contact avec le support 30, une couche d'un tel adhésif A. Dans ce cas, lors de la pose 140 d'un tel module de radio-identification sur le support 30, ledit module est maintenu en position sous l'action dudit adhésif A.

L'invention prévoit une première variante ou un premier complément selon lequel un tel adhésif A, par exemple sélectionné parmi des adhésifs sensibles ou activables par pression (ou connus sous l'acronyme « PSA » ou la dénomination anglo-saxonne « Pressure-Sensitive Adhesive ») puisse être déposé au moins sur une zone de la face supérieure 30u du support 30 avant que ne soit posé un module de radio-identification 10. Selon ce mode de réalisation décrit en liaison avec la figure 2B (non représenté en figure 2), une couche d'un matériau adhésif A est déposée depuis un dérouleur, sur les boucles 20L centrales des antennes 20 respectives des sections 30s du support 30. En variante, un tel adhésif A pourrait être déposé sur l'intégralité de la face supérieure 30u du support 30 ou sur d'autres portions de ladite face 30u correspondant à des sections d'antenne 20 différentes que celle décrivant les boucles centrales 20L, tel que décrit à titre d'exemple sur la figure 2B, si le ou les modules de radio-identification 10 ne sont pas destinés à occuper une position sensiblement centrale.

Selon un troisième mode de réalisation, l'invention prévoit que l'on ne puisse pas nécessairement utiliser un tel adhésif A. En effet, le matériau thermoplastique TP1, déposé en couche préalablement sur le module de radio-identification, peut être chauffé au-delà de la température de fusion dudit matériau TP1, juste avant d'entrer en contact avec la face supérieure du support 30. Ledit module 10 est alors posé puis pressé à chaud sur le support 30. En l'absence d'adhésif A, le matériau thermoplastique TP1 assure une fonction d'adhésion ou d'adhérence, une fois que ledit matériau thermoplastique TP1 est chauffé au-delà de la température de fusion dudit matériau TP1, et permet ainsi de ne pas recourir à un adhésif supplémentaire en tant que tel.

Un procédé d'assemblage 100 conforme à l'invention, tel que celui décrit à titre d'exemple en liaison avec les figures 2C, 2 et 4, peut comporter, après qu'un module de radio-identification ait été positionné sur le support 30, une étape 142 pour déposer au moins sur la face demeurant exposée 10u' dudit module de radio-identification 10, un treillis fibreux 50. Ce dernier est avantageusement agencé pour être irrémédiablement déstructuré lors d'une tentative malveillante de désassemblage de l'étiquette électronique 1, visant à arracher ledit module de radio-identification 10 du premier support 30. Comme l'indique la figure 2, un tel treillis peut être déroulé depuis un dérouleur D6 et guidé par un rouleau G6. Pour optimiser la quantité de treillis nécessaire, ce dernier peut être conditionné sous la forme d'une bande d'une largeur sensiblement supérieure à celle du module de radio-identification. Au-delà d'une fonction de sécurité visant à révéler une tentative de désassemblage d'une étiquette, la présence dudit treillis peut contribuer à la protection du composant électronique hébergé par le module de radio-identification contre d'éventuels chocs ou contraintes mécaniques.

En variante ou en complément, pour apporter un élément de sécurité supplémentaire visant à attester une tentative de fraude, l'invention prévoit qu'un procédé 100 puisse comporter une étape 143 pour inscrire, au moins sur la face exposée du module de radio-identification 10 et sur une partie de la face supérieure 30u du premier support 30 demeurant exposée, un message 60 dont la teneur est irrémédiablement altérée lors d'une tentative de désassemblage de l'étiquette électronique, visant à arracher ledit module de radio-identification 10, du premier support 30. Un tel message peut être textuel par exemple « void if removed » selon une terminologie anglo-saxonne ou figuratif (comportant un logo), voire mixte.

Qu'un treillis 50 et/ou un message 60 soi(en)t respectivement déposé(s) et/ou imprimé(s), un procédé 100 comporte une étape essentielle visant à déposer sur la face supérieure 30u du premier support 30 une couche d'un deuxième matériau thermoplastique TP2, ladite couche recouvrant au moins partiellement la première antenne conductrice 20 et le module de radio-identification 10. Une telle couche peut être déposée, comme l'indique la figure 2 à titre d'exemple, sous l'action d'un dérouleur D7 d'une bande de matériau thermoplastique. L'étape 150 consiste en outre à presser à chaud, c'est-à-dire à une température supérieure à la température de fusion du matériau thermoplastique TP2, l'assemblage pour assurer une coopération pérenne de la couche de matériau thermoplastique TP2 sur la face supérieure 30u du support 30. Une telle opération de pressage peut être réalisée au moyen d'une paire R2 de rouleaux en miroir l'un de l'autre, assurant une fonction de pressage de l'assemblage ou l'ensemble lorsque ce dernier est tracté entre lesdits rouleaux, pour que l'adhésion des deux couches du matériau TP2 soit durable. En variante, des presseurs parallèles, dont la température, le temps de pressage et la pression peuvent être ajustés au besoin, peuvent être utilisés en lieu et place desdits rouleaux R2.

A l'instar du premier matériau TP1 utilisé pour adapter un module de radio-identification, le matériau thermoplastique TP2 peut être sélectionné parmi des polyuréthanes thermoplastiques, des polyphénylènes oxydes, des polyamides, des polyacétates, des polyethylènes, des polypropylènes, des polyoléfines ou des Ethylènes-Acétates de Vinyles, avantageusement conditionnés sous forme de films. Selon le domaine d'application visé, le choix du matériau TP2 sera fonction de la température de fusion au-delà de laquelle ledit matériau peut être activé une ou plusieurs fois. Pour le domaine des étiquettes électronique pour laverie industrielle, un polyuréthane thermoplastique dont la température de fusion est supérieure à 180°C sera avantageusement privilégié.

Grâce à l'exploitation d'un tel matériau thermoplastique TP2, une étiquette électronique produite selon l'invention présente des propriétés intéressantes de résilience, tout en gardant une éventuelle souplesse. Elle dispose en quelque sorte naturellement d'une mémoire de forme, ne nécessitant pas l'emploi d'élément raidisseur additionnel. Le matériau TP2, ainsi que le matériau TP1, confère au corps de l'étiquette une très bonne tenue de sorte que ladite étiquette recouvre naturellement sa forme initiale, c'est-à-dire sensiblement plane, après pliage de l'étiquette. La qualité de la communication sans fil conférée par l'antenne 20 est donc préservée.

Un procédé d'assemblage 100 peut à présent être terminé. Selon la figure 2, une pluralité d'étiquettes électroniques est ainsi conditionnée sous la forme d'une bande. Ledit procédé 100 peut comporter toutefois des étapes additionnelles. Une première étape, non représentée en figure 4, peut consister à tester électriquement le fonctionnement de chaque étiquette produite. Une étiquette non opérationnelle peut être marquée, par exemple par jet d'encre, afin d'être identifiée et mise au rebut. Une telle étape de test peut en outre permettre de mettre à jour certaines mémoires du composant électronique du module de radio-identification de chaque étiquette produite. Cette étape de discrimination des étiquettes opérationnelles, permet ainsi de gérer et maîtriser la séquence des numéros de séries ou autres références uniques associées respectivement aux étiquettes et d'en assurer la cohérence avec une étape optionnelle dudit procédé 100 d'impression graphique, étape également non représentée sur la figure 4, pour permettre de personnaliser chaque étiquette, voire d'inscrire visuellement ledit numéro de série ou référence unique.

La bande comportant avantageusement une pluralité d'étiquettes, résultant d'un procédé d'assemblage 100 décrit en liaison avec la figure 2, peut aussi comporter une étape 160 pour découper ladite bande, afin de dissocier les étiquettes les unes des autres, voire des les conditionner chacune sous un blister. En variante, notamment si le support 30 n'est pas préalablement prédécoupé, une telle étape 160 peut consister à prédécouper ladite bande comportant les étiquettes produites pour rendre ces dernières dissociables aisément les unes des autres, tout en conservant un mode de conditionnement par bande comportant chacune une pluralité d'étiquettes.

Un procédé 100 peut en outre comporter une étape 151 pour déposer sur la face inférieure 30d du support 30, c'est-à-dire la face opposée à celle 30u accueillant un module de radio-identification 10, une couche d'un troisième matériau thermoplastique TP3. A l'issue de cette étape, le recto mais aussi le verso d'une étiquette électronique sensiblement plane peut être recouvert de matériau thermoplastique. Pour les raisons évoquées précédemment, ledit matériau TP3 peut être sélectionné avantageusement pour être sensiblement similaire aux premier et/ou deuxième matériaux thermoplastiques TP2 et/ou TP1.

Que cette dernière étape 151 soit réalisée ou non, nous pouvons en outre mentionner que l'emploi de la couche de matériau TP2, notamment si celle-ci est réalisée sur l'intégralité de la face supérieure du support 30, réduit ou supprime sensiblement tout relief au niveau de l'étiquette, facilitant ainsi l'application ultérieure de ladite étiquette 1 sur un objet hôte. Ladite application peut être réalisée par pressage à chaud. L'activation du matériau thermoplastique TP2, suivie d'un refroidissement, assure un positionnement pérenne de l'étiquette.

Les figures 3A, 3B et 3 décrivent un deuxième exemple d'un procédé d'assemblage d'une étiquette électronique conforme à l'invention. Selon cette variante, le format d'une étiquette obtenue est moindre que celui d'une étiquette électronique assemblée selon le procédé décrit précédemment en liaison avec les figures 2 et 2A.

En effet, comme l'indique l'exemple de la figure 3A, le support 30 consiste en une bande de moindre largeur, éventuellement prédécoupée. Le support 30 comporte une antenne 20 ne comportant, à titre d'exemple, qu'une boucle 20L. Le dipôle ainsi constitué par l'antenne 20 est donc plus court que celui d'une étiquette telle qu'assemblée avec une antenne 20 comportant une pluralité de boucles 20L, comme indiqué par la figure 2A.

La portée de communication procurée par l'antenne 20 selon l'exemple de la figure 3A, voire de la figure 3D, est donc plus faible mais suffisante pour servir de relai entre le module d'identification 10 couplé avec ladite antenne 20 et une antenne tierce 2, cousue par exemple sur un objet hôte 3 tel qu'un linge et traversant l'antenne 20, comme l'indique la figure 3C. Un procédé d'assemblage 100, tel que celui décrit en liaison avec les figures 3A, 3B et 3, est proche ou similaire de celui décrit précédemment. Nous pouvons constater qu'il comporte une étape 140 pour déposer, sur la face supérieure 30u du support 30, un module de radio-identification 10 préalablement adapté selon la technique décrite précédemment en liaison avec les figures 1A, 1B et 1. Un tel module comporte ainsi une couche d'un premier matériau thermoplastique TP1 sur ses faces inférieure 10d' et supérieure 10u'. L'invention prévoit que le positionnement dudit module de radio-identification 10 soit précisément déterminé, par exemple au moyen d'un système de vision, symbolisé en figure 3B par un capteur vidéo C, afin que l'antenne interne audit module de radio-identification 10 ne recouvre pas l'antenne conductrice 20. Ledit système de vision permet ainsi de maîtriser les coordonnées du module de radio-identification 10 dans le plan du support 30. Toute autre technique permettant de positionner correctement et précisément un module de radio-identification 10 sur le support 30 pourrait en variante être utilisée. Contrairement à la position sensiblement centrale d'un module déposé selon l'exemple de la figure 2B, un module de radio-identification 10 est déposé, selon ce deuxième mode de réalisation, sensiblement excentré au sein d'une section éventuellement prédécoupée 30s. Comme l'indique à titre d'exemple la figure 3D, un positionnement du module de radio-identification 10 excentré au sein d'une étiquette électronique 1 conforme à l'invention permet de disposer, en fin de processus d'assemblage, d'un corps principal d'étiquette électronique 1 comportant une plage P accrue, par exemple d'une hauteur h de quatre à cinq millimètres ou plus, comprenant partiellement l'antenne 20 mais n'englobant pas le module de radio-identification 10. Un tel processus d'assemblage 100 permet de minimiser la taille d'une étiquette électronique 1 tout en gardant une grande facilité pour coudre, par exemple comme l'indique la figure 3C, une antenne 2 traversant l'antenne 20 de ladite « mini étiquette », sans risque d'altérer le module de radio-identification de celle-ci. Ladite antenne 2 assure ainsi les fonctions respectives d'amélioration des performances électromagnétiques et de fixation de la mini étiquette sur l'objet hôte 3. Un tel agencement d'étiquette électronique 1, décrit en liaison avec la figure 3D illustrant un exemple d'étiquette assemblée conformément à l'invention, permet de présenter une configuration d'une antenne 20 différente de celle illustrée par la figure 3A, mais qui est agencée de sorte à demeurer par partie proche, c'est-à-dire une distance d de l'ordre d'un demi millimètre, de l'antenne 12 interne au module de radio-identification de l'étiquette, sans qu'à aucun moment ladite antenne 20 ne soit recouverte par ladite antenne interne 12. Un tel agencement assure un excellent couplage et minimise les risques de cassure lors des phases de pressage. Ainsi, indépendamment des matériaux utilisés pour constituer une telle étiquette électronique 1, un tel agencement selon lequel l'étiquette comporte une plage P préservant le module de radio-identification est particulièrement innovant et prévient toute destruction du module de radio-identification lors de la fixation, notamment par couture, de l'étiquette sur l'objet hôte 3.

En outre, la figure 3B décrit un exemple avantageux d'une ligne de production et/ou d'assemblage pour laquelle une pluralité de modules de radio-identification, en l'espèce, trois par trois, sont positionnés simultanément et respectivement dans trois sections 30s consécutives du support 30.

A l'instar d'un procédé d'assemblage décrit précédemment en liaison avec la figure 2, un procédé selon la figure 3 prévoit l'exploitation avantageuse d'un adhésif A dont la pégosité à température ambiante est suffisante pour maintenir la position d'un module de radio-identification 10 sur le support 30. En variante, la couche de matériau thermoplastique TP1, déposée préalablement sur le module de radio-identification, peut être chauffée au-delà de la température de fusion dudit matériau TP1, juste avant de poser ledit module de radio-identification sur la face supérieure du support 30. Ledit module 10 est alors posé, puis pressé à chaud sur le support 30.

Un procédé d'assemblage 100 conforme à l'invention et tel que celui décrit à titre d'exemple en liaison avec les figures 3 et 4, peut comporter, après qu'un module de radio-identification ait été positionné sur le support 30, une étape 142 pour déposer au moins sur la face supérieure demeurant exposée dudit module de radio-identification 10, un treillis fibreux 50 avantageusement agencé pour être irrémédiablement déstructuré lors d'une tentative malveillante de désassemblage de l'étiquette électronique 1, visant à arracher ledit module de radio-identification 10 du premier support 30. Un tel procédé 100 pourrait en outre comporter une étape 143 pour inscrire, au moins sur la face exposée du module de radio-identification 10 et sur une partie de la face supérieure 30u du premier support 30 demeurant exposée, un message 60 dont la teneur est irrémédiablement altérée lors d'une tentative de désassemblage de l'étiquette électronique visant à arracher ledit module de radio-identification 10 du premier support 30. Un tel message peut être textuel par exemple « void if removed » selon une terminologie anglo-saxonne ou figuratif, comportant un logo, voire mixte.

Ces étapes sont toutefois optionnelles. Par mesure de simplification, et pour illustrer une variante de réalisation selon laquelle l'emploi de moyens attestant une tentative d'altération de l'intégrité d'une étiquette électronique n'est pas requis, la figure 3 décrit un procédé d'assemblage ne comportant pas d'étapes 142 et/ou 143.

En revanche, un procédé 100 selon la figure 3 comporte une étape 150 essentielle pour déposer sur la face supérieure 30u du premier support 30 une couche d'un deuxième matériau thermoplastique TP2, ladite couche recouvrant au moins la première antenne conductrice 20 et le module de radio-identification 10. Compte tenu de la faible superficie de l'antenne électronique produite, ladite couche de matériau thermoplastique TP2 recouvre avantageusement toute la surface du support 30. Une telle couche peut être déposée, comme l'indique la figure 3 à titre d'exemple, sous l'action d'un dérouleur D7 d'une bande de matériau thermoplastique. L'étape 150 consiste en outre à presser à chaud, c'est-à-dire à une température supérieure à la température de fusion du matériau thermoplastique TP2, l'assemblage pour assurer une coopération pérenne de la couche de matériau thermoplastique TP2 sur la face supérieure 30u du support 30. Une telle opération de pressage peut être réalisée au moyen d'une paire R2 de rouleaux, en miroir l'un de l'autre, assurant une fonction de pressage de l'assemblage lorsque ce dernier est tracté entre lesdits rouleaux, pour que l'adhésion des deux couches du matériau TP2 soit durable.

Le deuxième matériau thermoplastique TP2 peut être sélectionné parmi des polyuréthanes thermoplastiques, des polyphénylènes oxydes, des polyamides, des polyacétates, des polyethylènes, des polypropylènes, des polyoléfines ou des Ethylènes-Acétates de Vinyles, avantageusement conditionnés sous forme de films.

L'exemple du procédé d'assemblage 100 décrit en liaison avec la figure 3 peut à présent être terminé. Une pluralité d'étiquettes électroniques peut ainsi être conditionnée sous la forme d'une bande. Ledit procédé 100 peut comporter toutefois des étapes additionnelles. Une première étape peut consister à tester électriquement le fonctionnement de chaque étiquette produite. Une étiquette électronique jugée non opérationnelle peut être marquée, par exemple par impression de type jet d'encre, afin d'être mise au rebut. Une telle étape de test peut en outre permettre de mettre à jour certaines mémoires du composant électronique du module de radio-identification de chaque étiquette produite. Cette étape de discrimination des étiquettes opérationnelles, permet ainsi de gérer et maîtriser la séquence des numéros de séries ou autres références uniques associées respectivement aux étiquettes et d'en assurer la cohérence avec une étape optionnelle dudit procédé 100 d'impression graphique, étape également non représentée sur la figure 4, pour permettre de personnaliser chaque étiquette, voire d'inscrire visuellement ledit numéro de série ou référence unique. Une telle étape peut en outre permettre de matérialiser graphiquement, par exemple par l'impression d'un repère, la plage P de couture éventuelle au sein de laquelle le module de radio-identification est préservé.

Une bande d'étiquettes résultant d'un procédé d'assemblage 100 décrit en liaison avec la figure 3 peut aussi comporter une étape 160 pour découper ladite bande, afin de dissocier les étiquettes les unes des autres, voire des les conditionner chacune sous un blister. En variante, notamment si le support 30 n'est pas préalablement prédécoupé, une telle étape 160 peut consister à prédécouper ladite bande comportant les étiquettes produites pour rendre ces dernières dissociables aisément les unes des autres, tout en conservant un mode de conditionnement par bande comportant chacune une pluralité d'étiquettes.

Selon cet exemple décrit en liaison avec la figure 3, un procédé 100 ne comporte pas d'étape pour déposer sur la face 30d du support 30, c'est-à-dire, la face opposée à celle 30u accueillant un module de radio-identification 10, une couche d'un troisième matériau thermoplastique TP3. Toutefois, une telle étape pourrait également être effectuée.

Les figures 2 et 3 décrivent ainsi des exemples d'un procédé d'assemblage d'étiquette de radio-identification particulièrement innovant et adaptable selon les exigences du domaine d'application. Les étiquettes produites peuvent être de différentes dimensions, comme l'indiquent les figures 2A et 3A, et comporter des antennes leur permettant de communiquer directement avec un lecteur distant, couplées ou encore connectées à une antenne tierce positionnée sur un objet hôte. L'emploi de matériaux thermoplastiques confère aux étiquettes conformes à l'invention, quel que soit leur agencement, une grande facilité de positionnement, voire de repositionnement, ainsi qu'une fiabilité inégalées. Elles sont particulièrement adaptées au domaine des laveries industrielles, exigent et sévère en matière d'exploitation compte tenu des températures élevées et de la chimie auxquelles sont exposées lesdites étiquettes.

Toutefois, un tel procédé ne saurait être limité à la production d'étiquettes électroniques pour ce seul domaine. Les matériaux exploités peuvent être avantageusement choisis pour satisfaire aux conditions et contraintes imposées par toute autre application.

## Revendications

1. Procédé d'assemblage (100) d'une étiquette électronique de radio-identification (1) comprenant un module de radio-identification (10), une première antenne conductrice (20), un premier support (30) diélectrique agencé pour accueillir ledit module de radio-identification (10) et ladite première antenne conductrice (20), ledit module de radio-identification comprenant un composant électronique (11) connecté électriquement à une deuxième antenne (12), la deuxième antenne étant couplé à la première antenne (20), ledit procédé comportant :
- une étape préalable (130) pour déposer sur les faces supérieure (10u) et inférieure (10d) d'une bande de modules de radio-identification (10) une couche d'un premier matériau thermoplastique (TP1) ayant des fonctions d'adhésion ;
- une étape (130a) pour presser l'ensemble à une température suffisante pour activer le premier matériau thermoplastique (TP1) pour assurer une coopération pérenne des couches du premier matériau (TP1) sur les faces supérieure (10u) et inférieure (10d) de la bande de modules de radio-identification (10) ;
- une étape (132) de découpe des modules recouverts du premier matériau (TP1) sur les faces supérieure (10u) et inferieure (10d) ;
- une étape (140) pour déposer un des modules découpés de radio-identification (10) sur la face supérieure (30u) du premier support (30), ce dernier comportant la première antenne conductrice (20), ledit module découpé de radio-identification (10) étant positionné à proximité immédiate de la première antenne conductrice (20),
- une étape (150) pour déposer sur la face supérieure (30u) du premier support (30) une couche d'un deuxième matériau thermoplastique (TP2) et pour presser l'ensemble à une température suffisante pour activer le deuxième matériau thermoplastique (TP2), ladite couche de deuxième matériau thermoplastique (TP2) recouvrant au moins partiellement la première antenne conductrice (20) et ledit module découpé de radio-identification (10).

2. Procédé (100) selon la revendication précédente, comportant, préalablement à l'étape (140) pour déposer ledit module découpé de radio-identification (10) sur la face supérieure (30u) du premier support (30), une étape (134) pour déposer au moins sur une zone de la face supérieure (30u) du premier support (30), une couche d'un matériau adhésif (A) dont la pégosité à température ambiante est suffisante pour maintenir la position dudit module découpé de radio-identification (10) sur le premier support (30), ladite zone de la face supérieure (30u) du premier support (30) étant destinée à accueillir ledit module découpé de radio-identification (10) .

3. Procédé (100) selon la revendication 1 comportant, préalablement à l'étape (140) pour déposer ledit module découpé de radio-identification (10) sur la face supérieure (30u) du premier support (30), une étape (131) pour déposer sur la face (10d') du module de radio-identification (10) destinée à coopérer avec la face supérieure (30u) du premier support (30), une couche d'un matériau adhésif (A) dont la pégosité à température ambiante est suffisante pour maintenir la position dudit module découpé de radio-identification (10) sur le premier support (30).

4. Procédé (100) selon la revendication 1 comportant, préalablement à l'étape (140) pour déposer ledit module découpé de radio-identification (10) sur la face supérieure (30u) du premier support (30), une étape (135) pour chauffer le premier matériau (TP1) déposé sur la face (10d') dudit module découpé de radio-identification (10) destinée à coopérer avec la face supérieure (30u) du premier support (30), au-delà de la température de fusion dudit premier matériau (TP1).

5. Procédé selon l'une quelconque des revendications précédentes, comportant une étape préalable (120) pour assembler le module de radio-identification (10), ladite étape (120) consistant :
- à déposer ou graver (121) sur un deuxième support diélectrique (13) la deuxième antenne conductrice (12) agencée pour assurer une communication électromagnétique en champ proche et le composant électronique (11) ;
- à assurer (122) une coopération électrique entre ladite deuxième antenne conductrice (12) et ledit composant électronique (11) et,
- à déposer (123) une couche d'une résine (14) sur les faces demeurant exposées dudit composant électronique (11) et ladite deuxième antenne conductrice (12).

6. Procédé (100) selon l'une quelconque des revendications précédentes, comportant une étape (142) pour déposer au moins sur la face demeurant exposée (10u') dudit module découpé de radio-identification (10), un treillis fibreux (50) agencé pour être irrémédiablement déstructuré lors d'une tentative de désassemblage de l'étiquette électronique (1) visant à arracher ledit module découpé de radio-identification (10) du premier support (30), ladite étape (142) étant mise en œuvre préalablement à l'étape (150) pour déposer sur la face supérieure (30u) du premier support (30) une couche d'un deuxième matériau thermoplastique (TP2).

7. Procédé (100) selon l'une quelconque des revendications précédentes, comportant une étape (143) pour inscrire, au moins sur la face exposée (10u') dudit module découpé de radio-identification (10) et sur une partie de la face supérieure (30u) du premier support (30) demeurant exposée, un message (60) dont la teneur est irrémédiablement altérée lors d'une tentative de désassemblage de l'étiquette électronique visant à arracher ledit module découpé de radio-identification (10) du premier support (30), ladite étape (143) étant mise en œuvre préalablement à l'étape (150) pour déposer sur la face supérieure (30u) du premier support (30) une couche d'un deuxième matériau thermoplastique (TP2) .

8. Procédé (100) selon l'une quelconque des revendications précédentes, comportant une étape (133) pour tester électriquement les modules de radio-identification (10) et pour lequel l'étape (140) pour déposer ledit module découpé de radio-identification (10) sur la face supérieure (30u) du premier support (30) n'est effectuée que si ledit module découpé de radio-identification est opérationnel (133-y).

9. Procédé (100) selon l'une quelconque des revendications précédentes, comportant une étape (111) préalable pour déposer la première antenne conductrice (20) sur le premier support (30) ou pour broder, imprimer, laminer ou tisser ladite antenne (20) sur ledit premier support (30).

10. Procédé (100) selon l'une quelconque des revendications précédentes, pour lequel la première antenne conductrice (20) portée par le premier support (30) comporte une ou plusieurs boucles (201) d'une piste et/ou d'un fil conducteurs.

11. Procédé (100) selon la revendication précédente, pour lequel, ledit module découpé de radio-identification comportant la deuxième antenne conductrice (12), la première antenne conductrice (20) est agencée pour former une ou plusieurs boucles (20L) d'un diamètre supérieur aux dimensions de ladite deuxième antenne conductrice (12) interne audit module découpé de radio-identification (10).

12. Procédé (100) selon l'une quelconque des revendications précédentes, pour lequel les premier (TP1) et deuxième (TP2) matériaux thermoplastiques sont sélectionnés parmi des polyuréthanes thermoplastiques, des polyphénylènes oxydes, des polyamides, des polyacétates, des polyethylènes, des polypropylènes, des polyoléfines ou des Ethylènes-Acétates de Vinyles.

13. Procédé (100) selon l'une quelconque des revendications précédentes, pour lequel les premier (TP1) et deuxième (TP2) matériaux thermoplastiques sont sélectionnés pour présenter des températures de fusion respectives supérieures à un seuil de température déterminé.

14. Procédé (100) selon l'une quelconque des revendications précédentes, pour lequel le premier support (30) comporte un matériau parmi le coton, le nylon, la viscose, un polyester, ou une matière synthétique.

15. Procédé (100) selon l'une quelconque des revendications précédentes, comportant une étape (112) pour prédécouper transversalement le premier support (30) lorsque que celui-ci se présente sous la forme d'une bande, chaque section (30s) ainsi matérialisée entre deux prédécoupes (30c) étant agencée pour comporter la première antenne conductrice (20) et accueillir ledit module découpé de radio-identification (10) .

16. Procédé (100) selon l'une quelconque des revendications précédentes, pour lequel les premier (TP1) et deuxième (TP2) matériaux thermoplastiques sont sensiblement identiques.

17. Procédé (100) selon l'une quelconque des revendications précédentes, comportant une étape (151) pour déposer sur la face (30d) du premier support (30), opposée à celle (30u) destinée à accueillir ledit module découpé de radio-identification (10), une couche d'un troisième matériau thermoplastique (TP3).

18. Procédé selon la revendication précédente, pour lequel le troisième matériau thermoplastique (TP3) est identique au deuxième matériau thermoplastique (TP2).

19. Procédé (100) selon l'une quelconque des revendications précédentes, pour lequel tout matériau (TP1, TP2, TP3) thermoplastique déposé sur le premier support (30) et/ou sur le module de radio-identification (10) présente une température de fusion supérieure à 150°c.

20. Etiquette électronique de radio-identification (1) comportant un support (30), une première antenne conductrice (20) d'étiquette, un module de radio-identification (10) comprenant un support diélectrique (13), une deuxième antenne conductrice (12) agencée pour assurer une communication électromagnétique en champ proche et un composant électronique (11), ledit composant électronique (11) étant connecté électriquement à ladite deuxième antenne conductrice (12), toute face exposée dudit composant électronique (11) et de la deuxième antenne conductrice (12) étant recouverte par une résine de protection (14), ledit module de radio-identification (10) comportant une couche d'un premier matériau thermoplastique (TP1) réactivable à chaud sur une face supérieure (10u') et sur une face inférieure (10d'), ledit module (10) étant positionné sur une face (30u) dite supérieure dudit support (30) de sorte que la deuxième antenne conductrice (12) interne audit module de radio-identification (10) ne recouvre pas ladite première antenne conductrice (20) d'étiquette, et ladite face supérieure (30u) du support (30) comportant une couche d'un deuxième matériau thermoplastique (TP2), ladite couche de deuxième matériau thermoplastique recouvrant au moins partiellement la première antenne conductrice (20) d'étiquette et le module de radio-identification (10), ladite couche de deuxième matériau thermoplastique (TP2) ayant été laminée à chaud de sorte à assurer une bonne adhésion avec la couche de premier matériau thermoplastique (TP1) dudit module (10).

21. Etiquette selon la revendication précédente, pour laquelle la première antenne conductrice d'étiquette (20) et le module de radio-identification (10) sont mutuellement agencés sur le support (30) pour que ledit module occupe une position excentrée sur ledit support (30), ce dernier comportant une plage (P) d'une hauteur minimale (h) déterminée, ladite plage (P) englobant partiellement ladite première antenne d'étiquette (20) mais non ledit module de radio-identification (10).

## Patentansprüche

1. Verfahren zum Montieren (100) eines elektronischen RFID-Etiketts (1), umfassend ein Funkidentifikationsmodul (10), eine erste leitfähige Antenne (20), einen ersten dielektrischen Träger (30), ausgelegt zum Aufnehmen des genannten Funkidentifikationsmoduls (10) und der genannten ersten leitfähigen Antenne (20), wobei das genannte Funkidentifikationsmodul eine elektronische Komponente (11) umfasst, die elektrisch mit einer zweiten Antenne (12) verbunden ist, wobei die zweite Antenne mit der ersten Antenne (20) gekoppelt ist, wobei das genannte Verfahren Folgendes beinhaltet:
- einen Vorabschritt (130) zum Absetzen einer Schicht aus einem ersten thermoplastischen Material (TP1) mit Haftfunktionen auf die Ober- (10u) und Unterseite (10d) eines Streifens von Funkidentifikationsmodulen (10);
- einen Schritt (130a) zum Pressen der Einheit bei einer Temperatur, die zum Aktivieren des ersten thermoplastischen Materials (TP1) ausreicht, um ein dauerhaftes Zusammenwirken der Schichten des ersten Materials (TP1) auf der Ober- (10u) und Unterseite (10d) des Streifens von Funkidentifikationsmodulen (10) sicherzustellen;
- einen Schritt (132) des Abschneidens der mit dem ersten Material (TP1) bedeckten Module auf der Ober-(10u) und Unterseite (10d);
- einen Schritt (140) zum Absetzen eines der abgeschnittenen Funkidentifikationsmodule (10) auf der Oberseite (30u) des ersten Trägers (30), wobei Letzterer die erste leitfähige Antenne (20) umfasst, wobei das genannte abgeschnittene Funkidentifikationsmodul (10) in unmittelbarer Nähe der ersten leitfähigen Antenne (20) positioniert wird;
- einen Schritt (150) zum Absetzen einer Schicht aus einem zweiten thermoplastischen Material (TP2) auf der Oberseite (30u) des ersten Trägers (30) und zum Pressen der Einheit bei einer Temperatur, die zum Aktivieren des zweiten thermoplastischen Materials (TP2) ausreicht, wobei die genannte Schicht aus dem zweiten thermoplastischen Material (TP2) zumindest teilweise die erste leitfähige Antenne (20) und das genannte abgeschnittene Funkidentifikationsmodul (10) bedeckt.

2. Verfahren (100) nach dem vorherigen Anspruch, das vor Schritt (140) zum Absetzen des genannten abgeschnittenen Funkidentifikationsmoduls (10) auf der Oberseite (30u) des ersten Trägers (30) einen Schritt (134) zum Absetzen einer Schicht aus einem Klebematerial (A), dessen Klebrigkeit bei Umgebungstemperatur zum Festhalten des genannten abgeschnittenen Funkidentifikationsmoduls (10) auf dem ersten Träger (30) ausreicht, mindestens auf einer Zone der Oberseite (30u) des ersten Trägers (30) beinhaltet, wobei die genannte Zone der Oberseite (30u) des ersten Trägers (30) zum Aufnehmen des genannten abgeschnittenen Funkidentifikationsmoduls (10) bestimmt ist.

3. Verfahren (100) nach Anspruch 1, das vor Schritt (140) zum Absetzen des genannten abgeschnittenen Funkidentifikationsmoduls (10) auf der Oberseite (30u) des ersten Trägers (30) einen Schritt (131) zum Absetzen einer Schicht aus einem Klebematerial (A), dessen Klebrigkeit bei Umgebungstemperatur zum Festhalten des genannten abgeschnittenen Funkidentifikationsmoduls (10) auf dem ersten Träger (30) ausreicht, auf der Seite (10d') des Funkidentifikationsmoduls (10) beinhaltet, die zum Zusammenwirken mit der Oberseite (30u) des ersten Trägers (30) bestimmt ist.

4. Verfahren (100) nach Anspruch 1, das vor Schritt (140) zum Absetzen des genannten abgeschnittenen Funkidentifikationsmoduls (10) auf der Oberseite (30u) des ersten Trägers (30) einen Schritt (135) zum Erhitzen des ersten Materials (TP1), das auf der Seite (10d') des genannten abgeschnittenen Funkidentifikationsmoduls (10) abgesetzt wurde, das zum Zusammenwirken mit der Oberseite (30u) des ersten Trägers (30) bestimmt ist, über die Schmelztemperatur des genannten ersten Materials (TP1) hinaus beinhaltet.

5. Verfahren nach einem der vorherigen Ansprüche, das einen Vorabschritt (120) zum Montieren des Funkidentifikationsmoduls (10) beinhaltet, wobei der genannte Schritt (120) besteht aus:
- Absetzen oder Ätzen (121) der zweiten leitfähigen Antenne (12), die zum Sicherstellen einer elektromagnetischen Nahfeldkommunikation ausgelegt ist, und der elektronischen Komponente (11) auf einem zweiten dielektrischen Träger (13);
- Sicherstellen (122) eines elektrischen Zusammenwirkens zwischen der genannten zweiten leitfähigen Antenne (12) und der genannten elektronischen Komponente (11); und
- Absetzen (123) einer Schicht aus einem Harz (14) auf den exponiert bleibenden Seiten der genannten elektronischen Komponente (11) und auf der genannten zweiten leitfähigen Antenne (12) .

6. Verfahren (100) nach einem der vorherigen Ansprüche, das einen Schritt (142) zum Absetzen eines Fasergitters (50), das so ausgelegt ist, dass es bei einem Versuch, das elektronische Etikett (1) zu demontieren, um das genannte abgeschnittene Funkidentifikationsmodul (10) vom ersten Träger (30) abzureißen, unwiderruflich zerstört wird, zumindest auf die exponiert bleibende Seite (10u') des genannten abgeschnittenen Funkidentifikationsmoduls (10) beinhaltet, wobei der genannte Schritt (142) vor dem Schritt (150) zum Absetzen einer Schicht aus einem zweiten thermoplastischen Material (TP2) auf die Oberseite (30u) des ersten Trägers (30) ausgeführt wird.

7. Verfahren (100) nach einem der vorherigen Ansprüche, das einen Schritt (143) zum Beschriften mindestens der exponierten Seite (10u') des genannten abgeschnittenen Funkidentifikationsmoduls (10) und eines exponiert bleibenden Teils der Oberseite (30u) des ersten Trägers (30), mit einer Nachricht (60) beinhaltet, deren Inhalt bei einem Versuch, das elektronische Etikett zu demontieren, um das genannte abgeschnittene Funkidentifikationsmodul (10) vom ersten Träger (30) abzureißen, unwiderruflich verändert wird, wobei der genannte Schritt (143) vor dem Schritt (150) zum Absetzen einer Schicht aus einem zweiten thermoplastischen Material (TP2) auf die Oberseite (30u) des ersten Trägers (30) ausgeführt wird.

8. Verfahren (100) nach einem der vorherigen Ansprüche, das einen Schritt (133) zum elektrischen Testen der Funkidentifikationsmodule (10) beinhaltet und wobei der Schritt (140) zum Absetzen des genannten abgeschnittenen Funkidentifikationsmoduls (10) auf der Oberseite (30u) des ersten Trägers (30) nur dann durchgeführt wird, wenn das genannte abgeschnittene Funkidentifikationsmodul funktionell ist (133-y).

9. Verfahren (100) nach einem der vorherigen Ansprüche, das einen Vorabschritt (111) zum Absetzen der ersten leitfähigen Antenne (20) auf dem ersten Träger (30) oder zum Sticken, Drucken, Laminieren oder Weben der genannten Antenne (20) auf dem genannten ersten Träger (30) beinhaltet.

10. Verfahren (100) nach einem der vorherigen Ansprüche, wobei die vom ersten Träger (30) getragene erste leitfähige Antenne (20) eine oder mehrere Schleifen (201) einer Leiterbahn und/oder eines Leitungsdrahtes umfasst.

11. Verfahren (100) nach dem vorherigen Anspruch, wobei, da das genannte abgeschnittene Funkidentifikationsmodul die zweite leitfähige Antenne (12) umfasst, die erste leitfähige Antenne (20) zum Bilden einer oder mehrerer Schleifen (20L) mit einem Durchmesser ausgelegt ist, der größer ist als die Abmessungen der genannten zweiten leitfähigen Antenne (12) innerhalb des genannten abgeschnittenen Funkidentifikationsmoduls (10).

12. Verfahren (100) nach einem der vorherigen Ansprüche, wobei das erste (TP1) und zweite (TP2) thermoplastische Material aus thermoplastischen Polyurethanen, Polyphenylenoxiden, Polyamiden, Polyacetaten, Polyethylenen, Polypropylenen, Polyolefinen oder Ethylenvinylacetaten ausgewählt werden.

13. Verfahren (100) nach einem der vorherigen Ansprüche, wobei das erste (TP1) und zweite (TP2) thermoplastische Material so ausgewählt werden, dass sie jeweils Schmelztemperaturen oberhalb einer bestimmten Temperaturschwelle aufweisen.

14. Verfahren (100) nach einem der vorherigen Ansprüche, wobei der erste Träger (30) ein Material aus Baumwolle, Nylon, Viskose, einem Polyester oder einem synthetischen Material umfasst.

15. Verfahren (100) nach einem der vorherigen Ansprüche, das einen Schritt (112) zum transversalen Vorschneiden des ersten Trägers (30) beinhaltet, wenn dieser in Form eines Streifens vorliegt, wobei jeder so zwischen zwei Vorschnitten (30c) materialisierte Abschnitt (30s) so ausgelegt ist, dass er die erste leitfähige Antenne (20) umfasst und das genannte abgeschnittene Funkidentifikationsmodul (10) aufnimmt.

16. Verfahren (100) nach einem der vorherigen Ansprüche, wobei das erste (TP1) und zweite (TP2) thermoplastische Material im Wesentlichen identisch sind.

17. Verfahren (100) nach einem der vorherigen Ansprüche, das einen Schritt (151) zum Absetzen einer Schicht aus einem dritten thermoplastischen Material (TP3) auf die Seite (30d) des ersten Trägers (30) gegenüber der jenigen (30u) beinhaltet, die zum Aufnehmen des genannten abgeschnittenen Funkidentifikationsmoduls (10) bestimmt ist.

18. Verfahren nach dem vorherigen Anspruch, wobei das dritte thermoplastische Material (TP3) mit dem zweiten thermoplastischen Material (TP2) identisch ist.

19. Verfahren (100) nach einem der vorherigen Ansprüche, wobei jedes auf den ersten Träger (30) und/oder auf das Funkidentifikationsmodul (10) abgesetzte thermoplastische Material (TP1, TP2, TP3) eine Schmelztemperatur über 150 °C hat.

20. Elektronisches Funkidentifikationsetikett (1) mit einem Träger (30), einer ersten leitfähigen Etikettantenne (20), einem Funkidentifikationsmodul (10) mit einem dielektrischen Träger (13), einer zweiten leitfähigen Antenne (12), die zum Gewährleisten von elektromagnetischer Nahfeldkommunikation ausgelegt ist, und einer elektronischen Komponente (11), wobei die genannte elektronische Komponente (11) elektrisch mit der genannten zweiten leitfähigen Antenne (12) verbunden ist, wobei jede exponierte Seite der genannten elektronischen Komponente (11) und der zweiten leitfähigen Antenne (12) mit einem Schutzharz (14) bedeckt ist, wobei das genannte Funkidentifikationsmodul (10) eine Schicht aus einem ersten thermoplastischen Material (TP1), das wärmereaktiviert werden kann, auf einer Oberseite (10u') und auf einer Unterseite (10d') umfasst, wobei das genannte Modul (10) auf einer sogenannten Oberseite (30u) des genannten Trägers (30) positioniert ist, so dass die zweite leitfähige Antenne (12) im Inneren des genannten Funkidentifikationsmoduls (10) die genannte erste leitfähige Etikettenantenne (20) nicht verdeckt, und wobei die genannte Oberseite (30u) des Trägers (30) eine Schicht aus einem zweiten thermoplastischen Material (TP2) umfasst, wobei die genannte Schicht aus zweitem thermoplastischem Material zumindest teilweise die erste leitfähige Etikettenantenne (20) und das Funkidentifikationsmodul (10) bedeckt, wobei die genannte Schicht aus zweitem thermoplastischem Material (TP2) wärmelaminiert wurde, um eine gute Haftung mit der Schicht aus erstem thermoplastischen Material (TP1) des genannten Moduls (10) sicherzustellen.

21. Etikett nach dem vorherigen Anspruch, wobei die erste leitfähige Etikettenantenne (20) und das Funkidentifikationsmodul (10) gegenseitig auf dem Träger (30) angeordnet sind, so dass das genannte Modul eine exzentrische Position auf dem genannten Träger (30) einnimmt, wobei Letzterer einen Bereich (P) mit einer bestimmten Mindesthöhe (h) aufweist, wobei der genannte Bereich (P) teilweise die genannte erste Etikettenantenne (20), nicht aber das genannte Funkidentifikationsmodul (10) umschließt.

## Claims

1. Method (100) for assembling an electronic radio-frequency identification tag (1) comprising a radio-frequency identification module (10), a first conductive antenna (20), a first dielectric support (30) arranged so as to receive said radio-frequency identification module (10) and said first conductive antenna (20), said radio-frequency identification module comprising an electronic component (11) electrically connected to a second antenna (12), the second antenna being coupled to the first antenna (20), said method including:
- a preliminary step (130) of depositing, on the upper (10u) and lower (10d) faces of a strip of radio-frequency identification modules (10), a layer of a first thermoplastic material (TP1) having adhesive functions;
- a step (130a) of pressing the assembly at a temperature sufficient to activate the first thermoplastic material (TP1) in order to ensure a permanent cooperation of the layers of the first material (TP1) on the upper (10u) and lower (10d) faces of the strip of radio-frequency identification modules (10);
- a step (132) of cutting the modules covered with the first material (TP1) on the upper (10u) and lower (10d) faces;
- a step (140) of depositing one of the cut radio-frequency identification modules (10) on the upper face (30u) of the first support (30), the latter containing the first conductive antenna (20), said cut radio-frequency identification module (10) being positioned in close proximity to the first conductive antenna (20),
- a step (150) of depositing, on the upper face (30u) of the first support (30), a layer of a second thermoplastic material (TP2) and of pressing the assembly at a temperature sufficient to activate the second thermoplastic material (TP2), said layer of second thermoplastic material (TP2) at least partially covering the first conductive antenna (20) and said cut radio-frequency identification module (10).

2. Method (100) according to the preceding claim, including, prior to the step (140) of depositing said cut radio-frequency identification module (10) on the upper face (30u) of the first support (30), a step (134) of depositing, at least on an area of the upper face (30u) of the first support (30), a layer of an adhesive material (A) the tack of which at ambient temperature is sufficient to hold said cut radio-frequency identification module (10) in position on the first support (30), said area of the upper face (30u) of the first support (30) being intended to receive said cut radio-frequency identification module (10).

3. Method (100) according to claim 1, including, prior to the step (140) of depositing said cut radio-frequency identification module (10) on the upper face (30u) of the first support (30), a step (131) of depositing, on the face (10d') of the radio-frequency identification module (10) intended to cooperate with the upper face (30u) of the first support (30), a layer of an adhesive material (A) the tack of which at ambient temperature is sufficient to hold said cut radio-frequency identification module (10) in position on the first support (30).

4. Method (100) according to claim 1, including, prior to the step (140) of depositing said cut radio-frequency identification module (10) on the upper face (30u) of the first support (30), a step (135) of heating the first material (TP1) deposited on the face (10d') of said cut radio-frequency identification module (10) intended to cooperate with the upper face (30u) of the first support (30) to above the melting temperature of said first material (TP1).

5. Method according to any one of the preceding claims, including a preliminary step (120) of assembling the radio-frequency identification module (10), said step (120) consisting of:
- depositing or etching (121) the second conductive antenna (12) arranged so as to ensure a near-field electromagnetic communication and the electronic component (11) on a second dielectric support (13);
- ensuring (122) an electrical cooperation between said second conductive antenna (12) and said electronic component (11), and
- depositing (123) a layer of a resin (14) on the faces that remain exposed of said electronic component (11) and said second conductive antenna (12) .

6. Method (100) according to any one of the preceding claims, including a step (142) of depositing, at least on the face (10u') of said cut radio-frequency identification module (10) that remains exposed, a fibrous mesh (50) arranged so as to be irreparably broken up during an attempt to dismantle the electronic tag (1) aimed at tearing said cut radio-frequency identification module (10) off the first support (30), said step (142) being implemented prior to the step (150) of depositing, on the upper face (30u) of the first support (30), a layer of a second thermoplastic material (TP2).

7. Method (100) according to any one of the preceding claims, including a step (143) of inscribing, at least on the exposed face (10u') of said cut radio-frequency identification module (10) and on a part of the upper face (30u) of the first support (30) that remains exposed, a message (60) the content of which is irreparably altered during an attempt to dismantle the electronic tag aimed at tearing said cut radio-frequency identification module (10) off the first support (30), said step (143) being implemented prior to the step (150) of depositing, on the upper face (30u) of the first support (30), a layer of a second thermoplastic material (TP2).

8. Method (100) according to any one of the preceding claims, including a step (133) of electrically testing the radio-frequency identification modules (10) and for which the step (140) of depositing said cut radio-frequency identification module (10) on the upper face (30u) of the first support (30) is only performed if said cut radio-frequency identification module is operational (133-y).

9. Method (100) according to any one of the preceding claims, including a preliminary step (111) of depositing the first conductive antenna (20) on the first support (30) or of embroidering, printing, laminating or weaving said antenna (20) on said first support (30).

10. Method (100) according to any one of the preceding claims, for which the first conductive antenna (20) borne by the first support (30) contains one or more loops (201) of a conductive track and/or a conductive wire.

11. Method (100) according to the preceding claim, for which, as said cut radio-frequency identification module contains the second conductive antenna (12), the first conductive antenna (20) is arranged so as to form one or more loops (20L) having a diameter greater than the dimensions of said second conductive antenna (12) inside said cut radio-frequency identification module (10).

12. Method (100) according to any one of the preceding claims, for which the first (TP1) and second (TP2) thermoplastic materials are selected from thermoplastic polyurethanes, polyphenylene oxides, polyamides, polyacetates, polyethylenes, polypropylenes, polyolefins or ethylenevinyl acetates.

13. Method (100) according to any one of the preceding claims, for which the first (TP1) and second (TP2) thermoplastic materials are selected to have respective melting temperatures above a defined temperature threshold.

14. Method (100) according to any one of the preceding claims, for which the first support (30) contains a material from among cotton, nylon, viscose, a polyester, or a synthetic material.

15. Method (100) according to any one of the preceding claims, including a step (112) of transversely pre-cutting the first support (30) when it is in the form of a strip, each section (30s) thus realized between two pre-cuts (30c) being arranged so as to contain the first conductive antenna (20) and receive said cut radio-frequency identification module (10).

16. Method (100) according to any one of the preceding claims, for which the first (TP1) and second (TP2) thermoplastic materials are substantially identical.

17. Method (100) according to any one of the preceding claims, including a step (151) of depositing, on the face (30d) of the first support (30) that is opposite that (30u) intended to receive said cut radio-frequency identification module (10), a layer of a third thermoplastic material (TP3).

18. Method according to the preceding claim, for which the third thermoplastic material (TP3) is identical to the second thermoplastic material (TP2).

19. Method (100) according to any one of the preceding claims, for which every thermoplastic material (TP1, TP2, TP3) deposited on the first support (30) and/or on the radio-frequency identification module (10) has a melting temperature greater than 150°C.

20. Electronic radio-frequency identification tag (1) containing a support (30), a first conductive tag antenna (20), a radio-frequency identification module (10) comprising a dielectric support (13), a second conductive antenna (12) arranged so as to ensure a near-field electromagnetic communication and an electronic component (11), said electronic component (11) being electrically connected to said second conductive antenna (12), every exposed face of said electronic component (11) and of the second conductive antenna (12) being covered by a protective resin (14), said radio-frequency identification module (10) containing a layer of a first thermoplastic material (TP1), which can be heat-reactivated, on an upper face (10u') and on a lower face (10d'), said module (10) being positioned on a face (30u), called upper, of said support (30) such that the second conductive antenna (12) inside said radio-frequency identification module (10) does not cover said first conductive tag antenna (20), and said upper face (30u) of the support (30) containing a layer of a second thermoplastic material (TP2), said layer of second thermoplastic material at least partially covering the first conductive tag antenna (20) and the radio-frequency identification module (10), said layer of second thermoplastic material (TP2) having been hot-laminated so as to ensure good adhesion to the layer of first thermoplastic material (TP1) of said module (10).

21. Tag according to the preceding claim, for which the first conductive tag antenna (20) and the radio-frequency identification module (10) are mutually arranged on the support (30) so that said module occupies an eccentric position on said support (30), the latter having a range (P) with a defined minimum height (h), said range (P) partially encompassing said first tag antenna (20) but not said radio-frequency identification module (10).
